(19) **Europäisches Patentamt**

**European Patent Office**

**Office européen des brevets**

(11) Veröffentlichungsnummer: **0 234 419**
**A2**

(12) **EUROPÄISCHE PATENTANMELDUNG**

(21) Anmeldenummer: **87101927.9**

(22) Anmeldetag: **12.02.87**

(51) Int. Cl.⁴: **H02G 1/08 , G02B 6/44**

(30) Priorität: **15.02.86 DE 8604092 U**

(43) Veröffentlichungstag der Anmeldung:
**02.09.87 Patentblatt 87/36**

(84) Benannte Vertragsstaaten:
**CH DE FR GB IT LI**

(71) Anmelder: **Peter Lancier**
**Maschinenbau-Hafenhütte GmbH & Co. KG**
**Petersheide 37**
**D-4400 Münster-Wolbeck(DE)**

(72) Erfinder: **Kelker, Konrad**
**Bohnenkamp 12**
**D-4416 Alverskirchen(DE)**

(74) Vertreter: **Schütz, Peter, Dipl.-Ing. et al**
**Patentanwälte Dr. Dieter v. Bezold Dipl.-Ing.**
**Peter Schütz Dipl.-Ing. Wolfgang Heusler**
**Maria-Theresia-Strasse 22 Postfach 86 02 60**
**D-8000 München 86(DE)**

(54) **Seilanfangsbirne.**

(57) Zur Verwendung nur einer Seilanfangsbirne zum Einziehen von Kabeln mit unterschiedlich starken Zugkräften ist eine äußere für starke Zugkräfte geeignete Seilanfangsbirne hohl ausgebildet und enthält im Inneren eine kleinere Seilanfangsbirne für geringere Zugkräfte, an der das Zugseil befestigt ist und durch eine Endöffnung der äußeren Birne herausgeführt ist. Letztere läßt sich zerlegen, um, an die innere Birne heranzukommen, die nach Entfernung konischer Halbschalen, über welche sich die Innenbirne gegen die Endöffnung der Außenbirne abstützt, durch diese Öffnung herausgezogen werden kann.

## Seilanfangsbirne

Die Erfindung bezieht sich auf eine Seilanfangsbirne zum Einziehen eines Kabels, beispielsweise in ein Rohr, wie sie im Oberbegriff des Anspruchs 1 vorausgesetzt ist.

Kabel, insbesondere Fernmeldekabel, werden häufig in unterirdisch ausgelegten Kunststoffrohren verlegt. Diese Kunststoffrohre weisen zum überwiegenden Teil einen verhältnismäßig großen Innendurchmesser (ca. 100 mm) auf. Die technische Weiterentwicklung von Fernmeldekabeln führte trotz erheblich größerer Übertragungskapazitäten zu bemerkenswert geringeren Außendurchmessers der Kabel. Wegen der kleineren Außendurchmesser der Kabel bot es sich aus verschiedenen Gründen an, in die zuvor erwähnten Kunststoffrohre mehrere Kabel zu verlegen.

Unerwünscht ist es hierbei aber, daß mehrere Kabel in den Kunststoffrohren nebeneinander mit gegenseitiger direkter Berührung verlegt sind. Diese Maßgabe führte zur Entwicklung von Kunststoff-Mehrfachrohren. Unter diesem Begriff versteht man durch geeignete Verbindungselemente gebündelte Kunststoffrohre gleichen oder unterschiedlichen Durchmessers. Diese Mehrfachrohre werden, bevor sie mit Kabeln belegt werden, in die eingangs erwähnten Kunststoffrohre mit großem Innendurchmesser eingezogen. In diese so eingezogenen Mehrfachrohre wird anschließend in jedes Rohr dann ein Kabel, vorzugsweise Glasfaserkabel, eingezogen.

Da diese Kabel auch nur sehr geringe Zugkräfte zulassen, war es erforderlich, ein Einziehgerät (Kabelziehwinde) zu haben, welches es ermöglicht, die Zugkräfte direkt am Kabelanfang zu messen. Ebenfalls mußte die dem Seil angekoppelte Seilanfangsbirne im Durchmesser so kleingehalten werden, daß sie auch noch durch die Mehrfachrohre gezogen werden kann.

Um nun nicht speziell für das Einziehen von Glasfaserkabeln eine eigene Windenausführung zu haben, die an der Seilanfangsbirne die entsprechend geringeren Zugkräfte (bis 10 kN) zuläßt, besteht die Aufgabe der im Anspruch 1 gekennzeichneten Erfindung darin, eine kombinierte Seilanfangsbirne z schaffen, die außer diesen geringen Zugkräften auch größere Zugkräfte gestattet, wie sie beim Einziehen oder Ausziehen herkömmlicher Kabel, z.B. in Kunststoffrohre von 100 mm Durchmesser mit 30 kN, benötigt werden.

Durch die Teilung der Außenbirne und Anordnung einer kleineren Innenbirne in der Außenbirne kann für unterschiedliche Zugkräfte und Rohrdurchmesser jeweils die geeignetere Seilanfangsbirne ausgewählt und benutzt werden. Bei Benutzung der größeren Außenbirne wird die Seilkraft des Zugseiles durch die Abstützvorrichtung unmittelbar auf die Außenbirne übertragen, so daß die in dieser befindliche Innenbirne und deren für geringere Zugkräfte ausgelegter Zugkraftmesser nicht belastet werden. Die Außenbirne ist zweckmäßigerweise in zwei hülsenförmige Gehäuseteile unterteilt, die beispielsweise miteinander verschraubt werden können. Jedoch ist auch eine Längsteilung der Außenbirne möglich.

Die Übertragung der Seilkräfte auf die Außenbirne erfolgt gemäß einer speziellen Ausgestaltung der Erfindung über konische Flächen, nämlich eine konische Außenfläche eines Seilendteiles, die gegen eine konische Innenfläche zweier Schalen anliegt, die sich ihrerseits mit einer Stufe in ihrer Außenfläche im Inneren des hülsenförmigen Gehäuseteils abstützen.

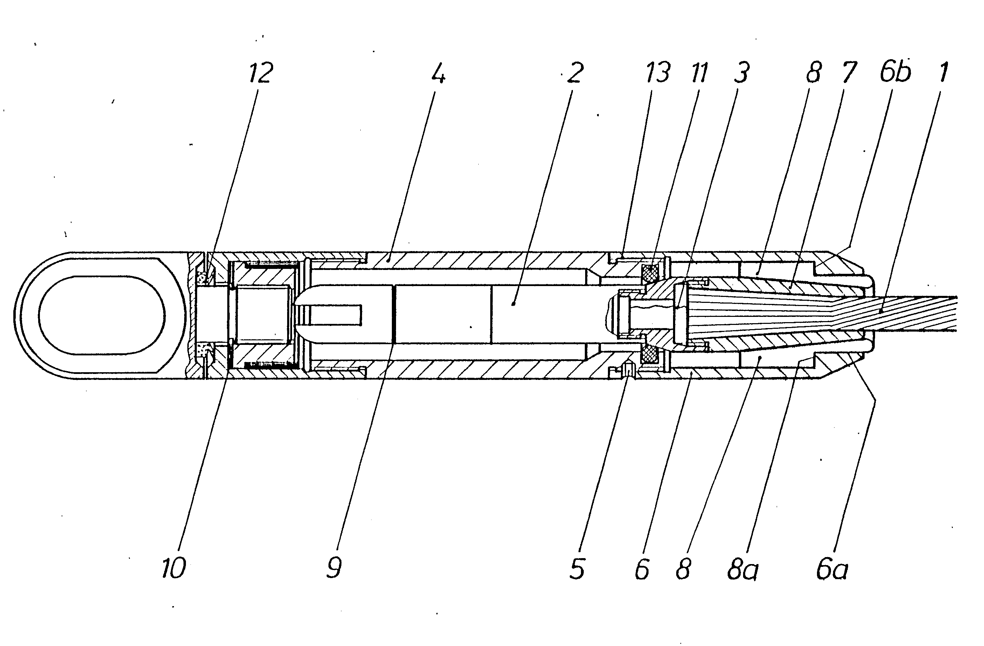

Nachfolgend sei ein Ausführungsbeispiel der Erfindung anhand der beiliegenden Zeichnung, die einen Längsschnitt durch eine kombinierte Seilanfangsbirne zeigt, im einzelnen erläutert.

An dem Windenseil 1 ist eine komplette Seilanfangsbirne 2 (Innenbirne) fest angebracht. Diese Seilanfangsbirne 2 ist im Durchmesser so ausgelegt, daß sie durch die geringen Innendurchmesser des Mehrfachrohres hindurchgezogen werden kann. Die Anfangsbirne 2 nimmt durch ihre geringeren Abmessungen jedoch nur Zugkräfte mit entsprechender Sicherheit bis maximal 10 kN auf. Diese Zugkräfte reichen für das Einziehen von z.B. Glasfaserkabeln aus; wobei hierbei über ein Meßsystem in der Anfangsbirne 2 die Zugkräfte direkt am Kabel gemessen und über elektrische Leiter 3 zum Steuerstand der Kabelziehwinde gelangen.

Um nun auch herkömmliche Kabel in Rohren, wie z.B. 100 mm ∅, ein-bzw. ausziehen zu können, bedarf es Ziehkräften, die über 10 kN liegen. Aus diesem Grunde wird die Seilanfangsbirne 2 mit einer weiteren Seilanfangsbirne 4 umgeben. Diese Außenbirne 4 sowie das Windenseil 1 lassen Zugkräfte mit entsprechender Sicherheit bis 30 kN zu.

Zur Demontage der Seilanfangsbirne 4 wird die Madenschraube 5 aus dem hinteren Gehäuseteil der Seilanfangsbirne 4 entfernt und dieses Gehäuseteil 6 abgeschraubt. Nun kann das Seil 1 mit der Anfangsbirne 2 aus dem abgeschraubten Gehäuseteil 6 herausgeschoben werden, wobei sich das konische Endteil 7 von den konischen Halbschalen 8 löst. Nach dem Herausschieben von Seil 1 mit Anfangsbirne 2 und den konischen Halbschalen 8 aus dem Gehäuseteil 6 werden die Halbschalen 8 von dem konischen Endteil 7 der Seilanfangsbirne 2 abgenommen. Dann kann die kleine Seilanfangsbirne 2 zum Einziehen von z.B. Glasfaserkabeln in die Mehrfachrohre eingesetzt werden.

Drehausgleichswirbel sind sowohl an der Seilanfangsbirne 2 als auch an der Seilanfangsbirne 4, 9 und 10 eingebaut.

Die erfindungsgemäße kombinierte Seilanfangsbirne ermöglicht es also, sowohl Glasfaserkabel in Mehrfachrohre mittels der entsprechenden kleinen Anfangsbirne 2 und Zugkräfte bis zu 10 kN als auch nach Montage der Außenbirne 4 um die Innenbirne 2 herkömmliche Kabel in Schutzrohre mit z.B. 100 mm Durchmesser mit Zugkräften bis 30 kN einbzw. auszuziehen. Man benötigt auf diese Weise für das Verlegen sowohl der hochempfindlichen Glasfaserkabel als auch herkömmlicher Kabel nur eine Kabelziehwinde.

**Ansprüche**

1) Seilanfangsbirne zum Einziehen eines Kabels, z.B. durch ein Rohr, mit einem Birnenkörper, an dessen einem Ende ein Zugseil befestigt ist und der an seinem anderen Ende eine Befestigungsvorrichtung für das Kabel aufweist, **dadurch gekennzeichnet**, daß der Birnenkörper (Außenbirne) als zweiteiliger Hohlkörper (Gehäuseteile 4, 6) ausgebildet ist und in seinem Inneren eine herausnehmbare kleinere Kabelanfangsbirne (Innenbirne 2) enthält, an der das Seil - (1) befestigt ist, und daß zur Übertragung der Seilkräfte auf die Außenbirne an deren seilseitigem Ende eine Abstützvorrichtung (7,8) vorgesehen ist.

2) Seilanfangsbirne nach Anspruch 1, dadurch gekennzeichnet, daß die beiden Gehäuseteile (4,6) des Hohlkörpers hülsenförmig ausgebildet sind und durch Befestigungselemente miteinander verbindbar sind, und daß das Seil (1) durch eine Endöffnung (6a) des einen Gehäuseteils (6) herausgeführt ist.

3) Seilanfangsbirne nach Anspruch 2, dadurch gekennzeichnet, daß die Befestigungselemente zwischen den Gehäuseteilen (4,6) als an deren offenen Endenausgebildetes Schraubgewinde (13) ausgebildet sind.

4) Seilanfangsbirne nach Anspruch 3, dadurch gekennzeichnet, daß als Sicherung für das Schraubgewinde (13) in dem das Muttergewinde enthaltenden Gehäuseteil (6) mindestens eine quer verlaufende Gewindebohrung mit Madenschraube - (5) vorgesehen ist.

5) Seilanfangsbirne nach Anspruch 1, 2 oder 3, dadurch gekennzeichnet, daß zwischen den beiden Gehäuseteilen (4,6) eine Dichtung (Ringdichtung 11) vorgesehen ist.

6) Seilanfangsbirne nach Anspruch 1, dadurch gekennzeichnet, daß die Abstützvorrichtung konische Schalen (8) aufweist, die ein sich konisch erweiterndes Endteil (7) des Seils (1) umgeben und deren Durchmesser am dickeren Konusende, welches der Endöffnung (6a) abgewandt ist, größer als deren Durchmesser ist.

7) Seilanfangsbirne nach Anspruch 5, dadurch gekennzeichnet, daß die Schalen (8) konische Halbschalen sind.

8) Seilanfangsbirne nach Anspruch 6 oder 7, dadurch gekennzeichnet, daß die Außenfläche der konische Innenflächen aufweisenden Schalen (8) mit einer Stufe (8a) zwischen zwei zylindrischen Abschnitten ausgebildet ist, die sich an einer Gegenstufe (6b) der Innenfläche des seilseitigen Gehäuseteils (6) abstützt, und daß der Durchmesser des dünneren zylindrischen Abschnittes dem Durchmesser der Endöffnung (6a) entspricht, und dieser wiederum größer ist als der größte Durchmesser des konischen Endteils (7) des Seils (1).

9) Seilanfangsbirne nach Anspruch 1, dadurch gekennzeichnet, daß die seilseitigen Enden von Außenbirne (4,6) und Innenbirne (2) konisch auslaufen.

10) Seilanfangsbirne nach Anspruch 1, dadurch gekennzeichnet, daß Außenbirne und Innenbirne je einen selbständig arbeitenden Drehausgleichswirbel (9,10) haben.

11) Seilanfangsbirne nach Anspruch 1 oder 10, dadurch gekennzeichnet, daß am kabelseitigen Ende der Außenbirne eine Abdichtung (Dichtung 12) vorgesehen ist.